# EUROPEAN PATENT APPLICATION

(11) **EP 4 394 202 A1**
(43) Date of publication of application: **03.07.2024**
(21) Application number: 23213931.1
(22) Date of filing: 04.12.2023
(51) Int. Cl.: F16F 1/40, F16F 13/06, F16F 13/08

(54) **ELASTIC HYDRAULIC SUPPORT APPARATUS, AND ASSEMBLY AND SYSTEM COMPRISING SAME**

(30) Priority: 06.12.2022 CN 202211554098
(71) Applicant: ContiTech Vibration Control GmbH, 30175 Hannover (DE)
(72) Inventor: Xia, Wei, 30165 Hannover (DE); Guo, Yong, 30165 Hannover (DE); Wang, Huanhuan, 30165 Hannover (DE)
(74) Representative: Continental Corporation

(57) **Abstract**

The present invention discloses an elastic hydraulic support apparatus, and an assembly and system comprising same. Defined with a first direction, the elastic hydraulic support apparatus comprises an elastic module and a hydraulic module, the elastic module comprising an elastically compressible first elastic body and a reinforcing member at least partially embedded in the first elastic body, the hydraulic module comprising a hydraulic chamber and an elastically compressible second elastic body arranged in the first direction, and the elastic module and the hydraulic module being fitted together. In the present invention, the elastic module and the hydraulic module are configured as mutually independent units to be fitted together; this facilitates maintenance and replacement, and also lowers the cost of maintenance.

## Description

### [Technical Field]

The present invention relates to an elastic hydraulic support apparatus, and an assembly and system comprising same, which can be applied in the field of wind power generation.

### [Background Art]

Climate change is a global problem facing humanity. As countries emit carbon dioxide, greenhouse gas levels are soaring, posing a threat to life systems. Against this background, countries around the world are reducing greenhouse gas emissions by global agreement, and several countries have thus proposed carbon peaks and carbon neutrality targets.

In order to achieve the "dual carbon" targets of carbon peak and carbon neutrality, people are actively developing clean energy sources, among which wind energy is a clean and sustainable new energy source. With the steady development of wind energy, wind power generation technology has developed rapidly. As wind power generating units at the megawatt level are steadily developed, the loads on turbines are increasing all the time, and as a result, the reduction of vibration in generating units is looking especially important.

In wind power generating units in the prior art, hydraulic support is the chief method used to support the gearbox. Hydraulic support is mainly used for four-point support systems. Hydraulic supports are installed at left and right sides of the gearbox of the wind power generating unit, one at each side, and mainly bear torsional loads of the gearbox; the main load-bearing components are elastic hydraulic support apparatuses. An elastic hydraulic support apparatus at a left lower end of the gearbox and an elastic hydraulic support apparatus at a right upper end are in communication via a hydraulic hose, and an elastic hydraulic support apparatus at a left upper end and an elastic hydraulic support apparatus at a right lower end are also in communication via a hydraulic hose. When a hydraulic support with such a structure bears a torsional load, liquid cannot flow because two force-bearing elastic hydraulic support apparatuses are in communication via a hydraulic hose; this is manifested as very high torsional rigidity. When a vertical load is borne, liquid in hydraulic chambers of the two elastic hydraulic support apparatuses at the lower end flows through the hydraulic hoses into hydraulic chambers of the elastic hydraulic support apparatuses at the upper end; this is manifested as very low vertical rigidity and high damping. Although the elastic hydraulic support apparatus in the prior art meets the demands of the generating unit gearbox in terms of support, vibration reduction and rigidity in specific operating conditions quite effectively, it still has the problems of difficult maintenance and replacement and high maintenance costs.

Thus, it is hoped to propose a novel technical solution to solve the abovementioned technical problems.

### [Summary of the Invention]

The technical problem to be solved by the present invention is: to provide an elastic hydraulic support apparatus, and an assembly and system comprising same, which facilitate maintenance and replacement, and have low maintenance costs.

In order to solve the above technical problem, the present invention may use the following technical solution: an elastic hydraulic support apparatus, defined with a first direction, wherein the elastic hydraulic support apparatus comprises an elastic module and a hydraulic module, the elastic module comprising an elastically compressible first elastic body and a reinforcing member at least partially embedded in the first elastic body, the hydraulic module comprising a hydraulic chamber and an elastically compressible second elastic body arranged in the first direction, and the elastic module and the hydraulic module being fitted together.

In a preferred embodiment, the second elastic body is elastically compressed to generate preload after installation and filling with liquid.

In a preferred embodiment, the elastic module has a first movement space extending in the first direction, and the elastic hydraulic support apparatus comprises a movable member which is located in the first movement space and positioned in front of the hydraulic module in the first direction.

In a preferred embodiment, the hydraulic chamber is located in front of or behind the second elastic body in the first direction.

In a preferred embodiment, the elastic module comprises a first limiting member, and the hydraulic module comprises a second limiting member cooperating with the first limiting member, the first limiting member being located in front of the second limiting member in the first direction.

In a preferred embodiment, after installation and filling with liquid, the elastic hydraulic support apparatus has a rebound space located between the first limiting member and the second limiting member.

In a preferred embodiment, the second elastic body is connected to the second limiting member.

In a preferred embodiment, the projection of the hydraulic chamber in the first direction falls completely on the second limiting member.

In a preferred embodiment, the elastic module comprises a first mounting member, the hydraulic module comprises a second mounting member mounted cooperatively with the first mounting member, and the first mounting member and the second mounting member together form a second movement space in which the hydraulic chamber is located.

In a preferred embodiment, the first movement space and the second movement space are in communication with each other.

In a preferred embodiment, the hydraulic module comprises a hydraulic sealing membrane forming the hydraulic chamber and a fixing member for fixing the hydraulic sealing membrane, the fixing member being partly located between the first mounting member and the second mounting member and partly extending into the second movement space, with an edge of the hydraulic sealing membrane being sealed between the fixing member and the first mounting member or the second mounting member.

In a preferred embodiment, the fixing member and the second elastic body are connected together.

In a preferred embodiment, the fixing member has a higher yield strength than the first mounting member and the second mounting member.

In a preferred embodiment, the elastic hydraulic support apparatus has a connecting hole running through the second mounting member and the fixing member and extending to the first mounting member, and a connecting member located in the connecting hole.

In a preferred embodiment, the elastic hydraulic support apparatus has an accommodating space located at a side of the second elastic body.

In a preferred embodiment, the movable member is connected to the hydraulic module.

In a preferred embodiment, the movable member is connected to a counterpart.

In a preferred embodiment, the counterpart is a torque arm of a gearbox.

In order to solve the above technical problem, the present invention may also use the following technical solution: an elastic hydraulic support assembly, comprising a support and two elastic hydraulic support apparatuses as described in any one of the embodiments above, the support having a hollow working region, one of the elastic hydraulic support apparatuses being mounted above the working region, and the other elastic hydraulic support apparatus being mounted below the working region.

In order to solve the above technical problem, the present invention may also use the following technical solution: an elastic hydraulic support system, comprising two elastic hydraulic support assemblies as described above, wherein the upper elastic hydraulic support apparatus of one of the elastic hydraulic support assemblies is in communication with the lower elastic hydraulic support apparatus of the other elastic hydraulic support assembly, and the other two elastic hydraulic support apparatuses are in communication with each other.

Compared with the prior art, the present invention has at least the following beneficial effect: configuring the elastic module and the hydraulic module as mutually independent units to be fitted together not only facilitates maintenance and replacement, but also lowers the cost of maintenance.

### [Brief Description of the Drawings]

Fig. 1 is a 3D drawing of an elastic hydraulic support system in a first embodiment of the present invention, showing
   a scenario in which torque arms produce torsion during operation of a gearbox, wherein the gearbox is not shown, and only parts of the torque arms are shown.
Fig. 2 is a 3D drawing of the elastic hydraulic support system shown in Fig. 1 in another operating condition, showing
   a scenario in which the gearbox is displaced vertically upward.
Fig. 3 is a main view of an elastic hydraulic support assembly of the elastic hydraulic support system shown in Fig. 1.
Fig. 4 is a 3D drawing of an elastic hydraulic support apparatus of the elastic hydraulic support assembly shown in Fig. 3.
Fig. 5 is a 3D drawing of the elastic hydraulic support apparatus shown in Fig. 4, viewed from another angle.
Fig. 6 is a partial 3D exploded drawing of the elastic hydraulic support apparatus shown in Fig. 4.
Fig. 7 is a 3D drawing of the elastic hydraulic support apparatus shown in Fig. 6, viewed from another angle.
Fig. 8 is a view of a section taken along line A-A of the elastic hydraulic support apparatus shown in Fig. 4.
Fig. 9 is a partial 3D exploded drawing of the elastic hydraulic support apparatus shown in Fig. 8.
Fig. 10 is a sectional view of an elastic hydraulic support apparatus in a second embodiment of the present invention.
Fig. 11 is a 3D drawing of an elastic hydraulic support apparatus in a third embodiment of the present invention.
Fig. 12 is a view of a section taken along line B-B of the elastic hydraulic support apparatus shown in Fig. 11.
Fig. 13 is a sectional view of an elastic hydraulic support apparatus in a fourth embodiment of the present invention.

### [Detailed Description of Embodiments]

The technical solution in embodiments of the present invention is explained and illustrated below with reference to the accompanying drawings of embodiments of the present invention. However, the embodiments below are merely preferred embodiments, not all embodiments, of the present invention. All other embodiments obtained by those skilled in the art on the basis of embodiments in the present invention without expending inventive effort are included in the scope of protection of the present invention.

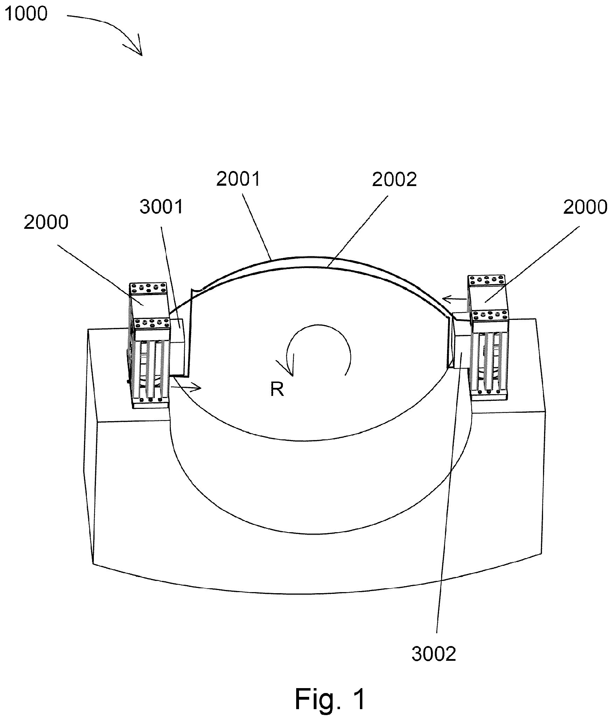

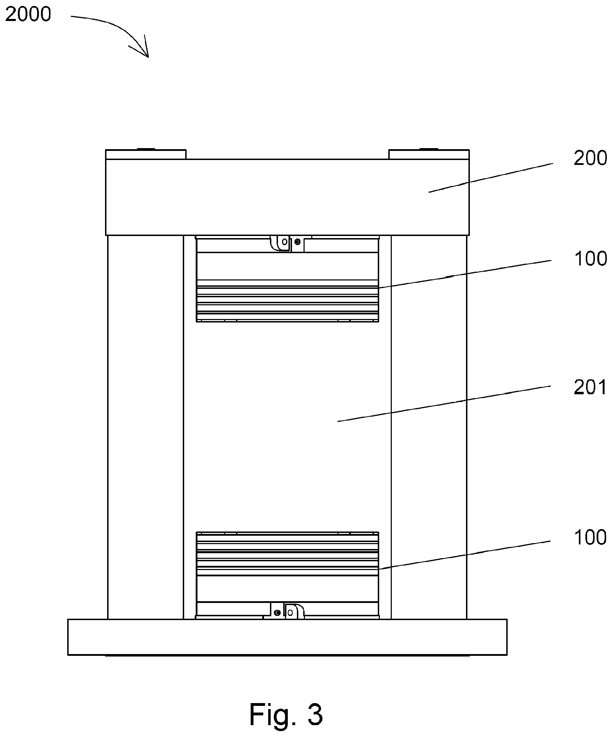

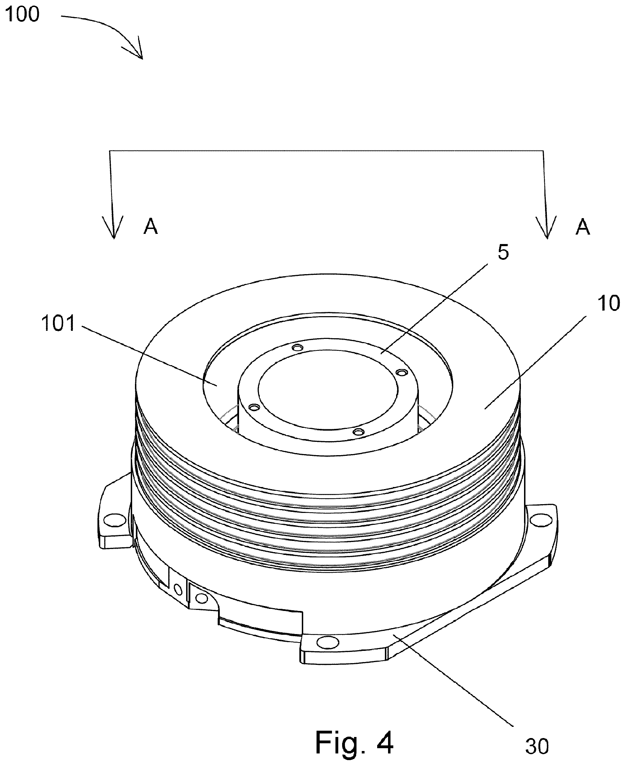

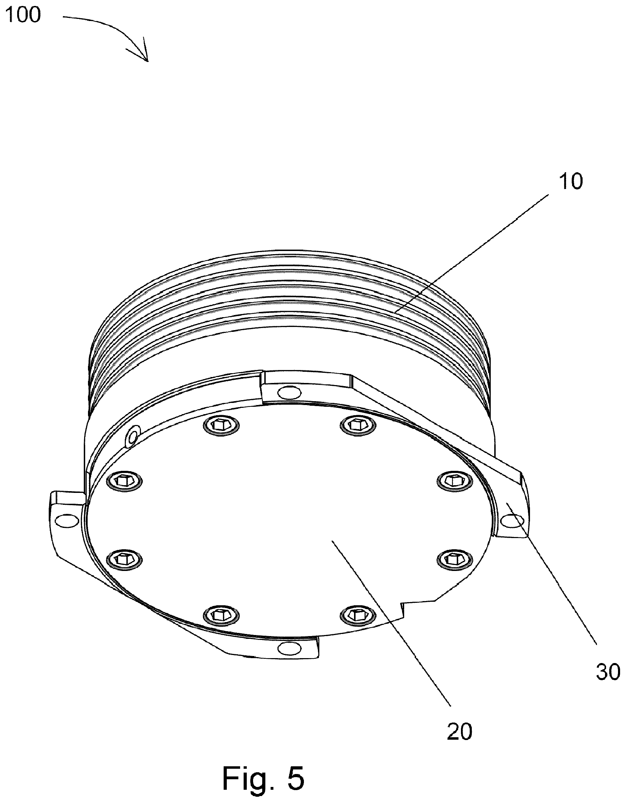

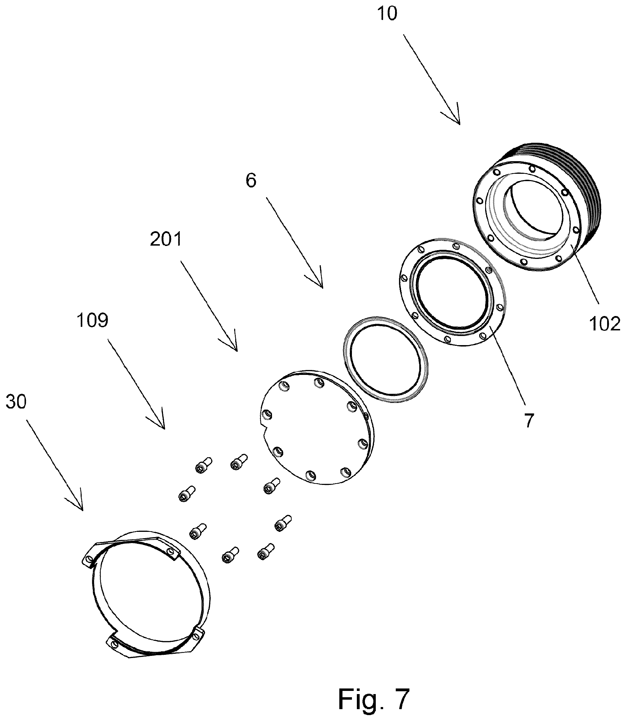

Referring to Figs. 1 - 3, the present invention provides an elastic hydraulic support system 1000, which may be used for, but is not limited to being used for, supporting and reducing vibration in a gearbox of a generating unit in the field of wind power generation, so as to manifest high torsional rigidity when bearing a torsional load, and manifest very low vertical rigidity and high damping when bearing a vertical load. The elastic hydraulic support system 1000 comprises two elastic hydraulic support assemblies 2000. Each elastic hydraulic support assembly 2000 comprises two elastic hydraulic support apparatuses 100 and a support 200, the support 200 having a hollow working region 201; one of the elastic hydraulic support apparatuses 100 is mounted above the working region 201, while the other elastic hydraulic support apparatus 100 is mounted below the working region 201. The upper elastic hydraulic support apparatus 100 of one elastic hydraulic support assembly 2000 and the lower elastic hydraulic support apparatus 100 of the other elastic hydraulic support assembly 2000 are in communication via a high-pressure hose 2001; the remaining two elastic hydraulic support apparatuses 100 are in communication via another high-pressure hose 2002. In a preferred embodiment, the elastic hydraulic support system 1000 further comprises throttle holes separately disposed between two elastic hydraulic support apparatuses 100 in communication with each other; the purpose of the throttle holes is to increase damping, thus achieving a better vibration reduction effect. The elastic hydraulic support apparatuses 100 may be filled with hydraulic fluid before installation or after installation, and in general, are preferably filled with hydraulic fluid after installation, i.e. the gearbox is first mounted to the elastic hydraulic support system 1000, and then the four elastic hydraulic support apparatuses 100 are filled with the required hydraulic fluid. After installation, a torque arm 3001 at one side of the gearbox is located between the upper and lower elastic hydraulic support apparatuses 100 of one of the elastic hydraulic support assemblies 2000, and a torque arm 3002 at the other, opposite side of the gearbox is located between the upper and lower elastic hydraulic support apparatuses 100 of the other elastic hydraulic support assembly 2000. The following description focuses on the elastic hydraulic support apparatus 100, in conjunction with Figs. 4-9.

Referring to Figs. 4 - 9, a first direction F and a transverse direction perpendicular to the first direction F are defined. The elastic hydraulic support apparatus 100 comprises an elastic module 10 and a hydraulic module 20 which are fitted together, as well as a mounting ring 30 for mounting the elastic hydraulic support apparatus 100 to the support 200. The elastic module 10 comprises an elastically compressible first elastic body 1, and a reinforcing member 2 at least partially embedded in the first elastic body 1; in a preferred embodiment, the first elastic body 1 comprises two or more elastic body layers, and the reinforcing member 2 comprises one or more non-elastic body intermediate reinforcing layers. The hydraulic module 20 comprises an elastically compressible second elastic body 4 and a hydraulic chamber 3 used to accommodate the hydraulic fluid, arranged in the first direction F; in the first direction F, the hydraulic chamber 3 is located in front of or behind the second elastic body 4. In the present invention, the elastic module 10 and the hydraulic module 20 are configured as mutually independent units to be fitted together; this facilitates maintenance and replacement, and also lowers the cost of maintenance. According to the present invention, all conventional constant-pressure fluids may be used as the hydraulic fluid; taking a wind turbine as an example, in suitable circumstances, anti-freezing alcohol, water or hydraulic oil may be added. According to the present invention, a material used for the first elastic body 1 and the second elastic body 4 substantially consists of natural rubber/a natural rubber derivative, or consists of a suitable elastic polymerized plastic or plastic mixture. The first elastic body 1 and the second elastic body 4 may have different hardness and different damping properties according to the desired requirements. Preferably, an elastic body material with a Shore A hardness of 20 - 100 is used. According to the present invention, the reinforcing member 2 is, as far as possible, made of a non-elastic material with a low compression rate. These materials are preferably metal plate, but other materials may also be used, e.g. hard plastics, composite materials, or materials containing carbon fibre. The reinforcing member 2 and the first elastic body 1 are preferably connected to each other by vulcanization. For the reinforcing member 2, multiple layers of separate round plates may be used, or a continuous metal framework may be used, such as a coil spring. In a preferred embodiment, the first elastic body 1 and the second elastic body 4 are both elastically compressed to generate preload after installation and filling with liquid; this helps to achieve higher torsional rigidity, thereby increasing the resistance of the elastic hydraulic support apparatus 100 to external interference. In a preferred embodiment, the hydraulic chamber 3 does not overlap the projections of the first elastic body 1 and the reinforcing member 2 in the transverse direction; with this configuration, the structural design of the hydraulic chamber 3 is not restricted by the first elastic body 1 and the reinforcing member 2 in the transverse direction, and the dimension thereof in the transverse direction may be determined according to actual requirements of use. The mounting ring 30 may be a separate component, or may be provided by the elastic module 10 and/or the hydraulic module 20.

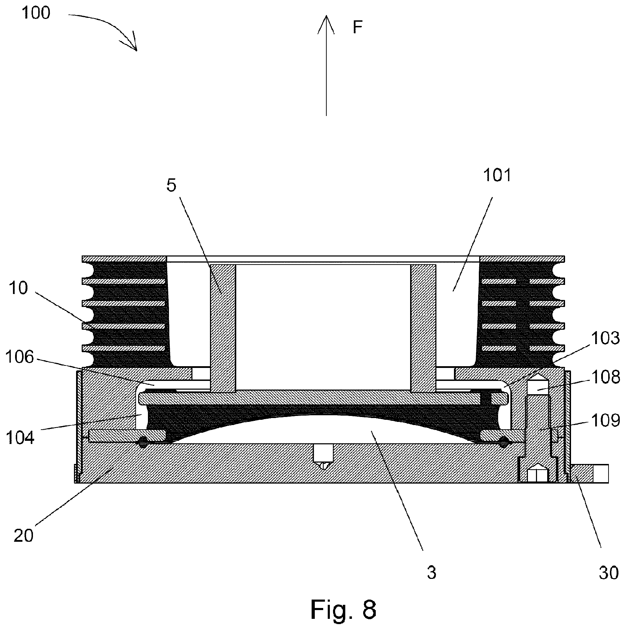

Focusing on Figs. 4 and 8, the elastic module 10 has a first movement space 101 extending in the first direction F, and the elastic hydraulic support apparatus 100 comprises a movable member 5, which is located in the first movement space 101 and positioned in front of the hydraulic module 20 in the first direction F. The movable member 5 is used to transfer force between the hydraulic module 20 and the torque arm 3001, 3002; by having the movable member disposed in the first movement space 101 formed by the elastic module 10, the product space can be utilized effectively, and the elastic module 10 can be used to limit the movable member 5 transversely. There is a transverse gap between the movable member 7 and the first elastic body 2, and a transverse gap between the movable member and the reinforcing member 3, to not only facilitate fitting of the movable member 7, but also to make way when the first elastic body 2 experiences compressive deformation. In this embodiment, the movable member 5 is connected to the hydraulic module 20, but of course, in other embodiments, the movable member 5 may not be connected to the hydraulic module 20, being connected to a counterpart instead, e.g. connected to the torque arm 3001, 3002 of the gearbox, in which case the movable member 5 cooperates with the hydraulic module 20.

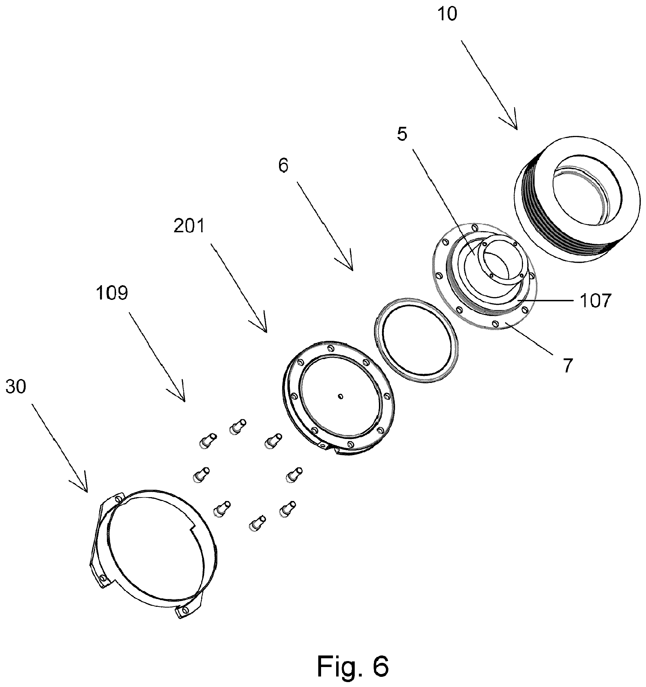

Referring to Figs. 6-9, the elastic module 10 comprises a first mounting member 102 connected to the first elastic body 1, and the hydraulic module 20 comprises a second mounting member 201 mounted in cooperation with the first mounting member 102, the first mounting member 102 and the second mounting member 201 together forming a second movement space 103; in this embodiment, the hydraulic chamber 3 and the second elastic body 4 are both located in the second movement space 103. The first movement space 101 and the second movement space 103 are preferably in communication with one another; this enables the movable member 5 to be directly connected to the hydraulic module 10 or to directly cooperate with the hydraulic module 10. In the first direction F, the second movement space 103 is preferably located behind the first elastic body 1 and the reinforcing member 2, and the projection of the second movement space 103 at least partially covers the first elastic body and/or the reinforcing member 2; this helps to increase the flexibility of volume design of the hydraulic chamber 3 in the transverse direction. The elastic hydraulic support apparatus 100 has an accommodating space 104 located at a side of the second elastic body 4; with such a configuration, when the second elastic body 4 is acted on by the movable member 5 or hydraulic fluid in the hydraulic chamber 3 and experiences compressive deformation, some of the material of the second elastic body 4 can enter the accommodating space 104, thus providing more travel and better cushioning performance. In this embodiment, the accommodating space 104 is located at an outer side of the second elastic body 4 and in the second movement space 103.

Continuing to refer to Figs. 6-9, the elastic module 10 comprises a first limiting member 105, and the hydraulic module 20 comprises a second limiting member 202 cooperating with the first limiting member 105; in the first direction F, the first limiting member 105 is located in front of the second limiting member 202. When specific operating conditions occur, for example when the gearbox experiences vertical displacement, one of the elastic hydraulic support apparatuses 100 does not bear a vertical load, so a large amount of hydraulic fluid will flow into the hydraulic chamber 3 of this elastic hydraulic support apparatus 100, and the first limiting member 105 can limit excessive expansion of the hydraulic chamber 3 in the first direction F by means of the second limiting member 202; this can effectively protect the hydraulic module 20, and also helps to control the travel of the torque arm cooperating with the elastic hydraulic support apparatus 100 bearing a vertical load. After installation and filling, the elastic hydraulic support apparatus has a rebound space 106 located between the first limiting member 105 and the second limiting member 202; with such a configuration, when vertical displacement of the gearbox occurs, a large amount of hydraulic fluid flows from the force-bearing elastic hydraulic support apparatus 100 into the hydraulic chamber 3 of the non-force-bearing elastic hydraulic support apparatus 100, and the second limiting member 202 can move a certain distance in the first direction F before cooperating with the first limiting member 105, making it possible to accommodate a greater amount of hydraulic fluid flowing from the force-bearing elastic hydraulic support apparatus 100, and thus increasing the vertical displacement of the gearbox, to improve the vibration reduction effect. Further, the elastic hydraulic support apparatus 100 comprises a cushioning member 107 located between the first limiting member 105 and the second limiting member 202. In this embodiment, the first limiting member 105 extends from the first mounting member 102 into the first movement space 101; with such a configuration, the elastic deformation of the first elastic body 1 will not affect or be affected by the elastic deformation of the second elastic body 4 and the change in volume of the hydraulic chamber 3. In this embodiment, the second limiting member 202 and the movable member 5 are connected to each other so as to realize their connection to the hydraulic module 20; the second limiting member 202 and the movable member 5 may be a one-piece structure, or may be connected together as a two-piece structure by welding, bolts, interference fit, clearance fit, etc. In a preferred embodiment, the second elastic body 4 is connected to the second limiting member 202 by a vulcanisation process; such a configuration can avoid direct contact between the second limiting member 202 and components forming the hydraulic chamber 3, so has a protective effect. Of course, in other embodiments, the second elastic body 4 and the second limiting member 202 may also be formed separately, and then connected together by glue, etc. In a preferred embodiment, the projections of the hydraulic chamber 3 and the second elastic body 4 in the first direction F fall entirely on the second limiting member 202; this can ensure that the second limiting member 202 fully cooperates with the hydraulic chamber 3 and the second elastic body 4. The second limiting member 202 has a transverse displacement gap (not labelled), to ensure that the elastic hydraulic support apparatus 100 has a specific transverse displacement.

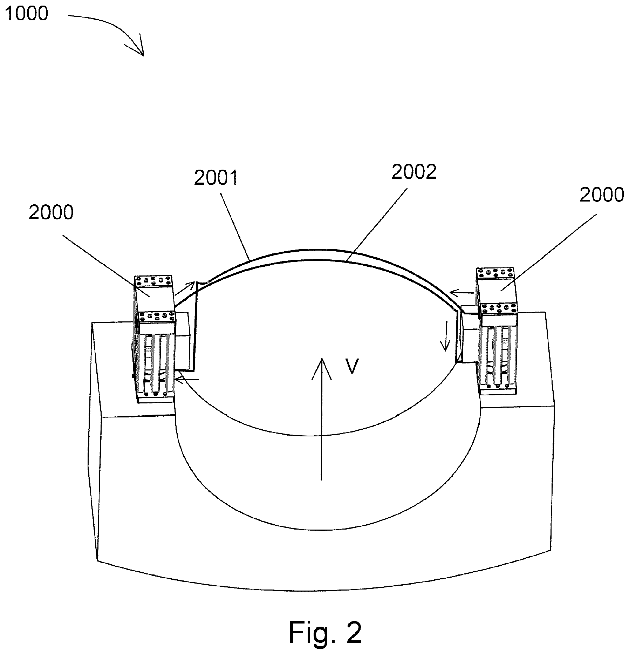

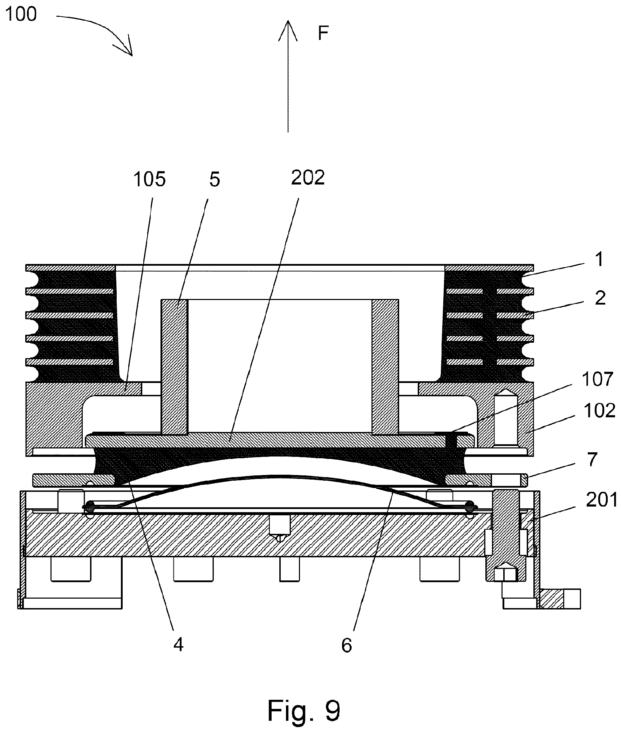

Continuing to refer to Figs. 6-9, the hydraulic module 20 comprises a hydraulic sealing membrane 6 forming the hydraulic chamber 3, and a fixing member 7 for fixing the hydraulic sealing membrane 6. The hydraulic sealing membrane 6 is generally made of natural rubber or a natural rubber derivative; this material must be resistant to shearing and pressure within a large range, and preferably has a smooth, dense structure which has no surface holes or only has holes of extremely small diameter that are unable to absorb microdroplets of hydraulic fluid. The fixing member 7 is partly located between the first mounting member 102 and the second mounting member 201 and partly extends into the second movement space 103, with an edge of the hydraulic sealing membrane 6 being sealed between the fixing member 7 and the second mounting member 201, the hydraulic sealing membrane 6 and the second mounting member 201 enclosing and forming the hydraulic chamber 3, With such a configuration, firstly, the fixing member 7 can be configured to be lighter than the first mounting member 102 and the second mounting member 201, so as to facilitate the assembly of components; secondly, the first mounting member 102 which does not need to be used to seal the hydraulic sealing membrane 6 can be configured to be slightly thinner in the transverse direction, so as to not only lighten the weight of the product but also increase the volume of the second movement space 103, thus helping to increase the flexibility of volume design of the hydraulic chamber 3 in the transverse direction; and thirdly, different requirements for compressive rigidity can be met by selecting the fixing member 7 with different internal diameters, without any need to change the first mounting member 102 and the second mounting member 201, so product versatility is increased. Of course, in other embodiments, the edge of the hydraulic sealing membrane 6 may also be sealed between the fixing member 7 and the first mounting member 102 according to actual needs. In a preferred embodiment, the fixing member 7 has a higher yield strength than the first mounting member 102 and the second mounting member 201; thus, the fixing member 7 may be configured to be slightly thinner, and the length of extension of the fixing member 7 into the second movement space 103 may be adjusted more flexibly. In a preferred embodiment, in the transverse direction, the projection of the fixing member 7 is completely covered by the projection of the hydraulic chamber 3; thus, the size of the hydraulic chamber 3 in the transverse direction can be changed effectively by changing the size of the fixing member 7. In a preferred embodiment, the fixing member 7 and the second elastic body 4 are connected to each other by a vulcanisation process; this not only facilitates product assembly, but also maintains the position of the second elastic body 4 more effectively than if there were no connection relationship, helping to improve the stability of the product's overall performance. When the edge of the hydraulic sealing membrane 6 is sealed between the fixing member 7 and the second mounting member 201, the hydraulic module 20 preferably has a pre-positioning structure (not shown) for pre-positioning the fixing member 7, the hydraulic sealing membrane 6 and the second mounting member 201. In a preferred embodiment, the elastic hydraulic support apparatus 100 has a connecting hole 108 running through the second mounting member 201 and the fixing member 7 and extending to the first mounting member 102, and a connecting member 109 located in the connecting hole 108, wherein the connecting hole 108 may be a threaded hole, and the connecting member 109 may be a bolt. With such a configuration, firstly, the fixing member 7 can be fixed more effectively, and secondly, the area over which the first mounting member 102 and the second mounting member 201 fix the fixing member 7 can be reduced while achieving the same fixing force, thus making it easier to reduce the thickness of the first mounting member 102 in the transverse direction and increase the versatility of the fixing member 7. In a preferred embodiment, the projection of the hydraulic chamber 3 in the first direction F at least partly covers the first elastic body 1 and/or the reinforcing member 2, i.e. has a larger transverse volume compared with the prior art. With such a configuration, the hydraulic force-bearing area can be increased effectively, such that the hydraulic pressure produced in the hydraulic chamber 3 is smaller for the same external force, reducing the pressure on the sealing pressure membrane 6 and thus reducing the force borne by the sealing pressure membrane 6 per unit area, so that the service life of the product can be prolonged. Focusing on Figs. 8 and 9, the second elastic body 4 and the second mounting member 201 enclose and form a third movement space (not labelled) in which the hydraulic sealing membrane 6 moves. In a preferred embodiment, different parts of the second elastic body 4 in the transverse direction have different thicknesses; compared with uniform thickness, this can increase the travel of the movable member 5 under the same load. Referring to Figs. 1 - 9, the elastic hydraulic support system 1000 uses two identical said elastic hydraulic support assemblies 2000, and each of the elastic hydraulic support assemblies 2000 uses two identical said elastic hydraulic support apparatuses 100. When subjected to a torsional load, for example, as shown in Fig. 1, the two torque arms 3001, 3002 both twist in a torsion direction R; the two elastic hydraulic support apparatuses 100 cooperating with the torque arms 3001, 3002 are loaded simultaneously, the first elastic body 1 and second elastic body 4 of the two force-bearing elastic support apparatuses 100 experience further elastic compressive deformation, and at the same time, the pressure in the high-pressure hose 2001 connecting the two force-bearing elastic support apparatuses 100 increases sharply, the hydraulic fluid in the two force-bearing elastic hydraulic support apparatuses 100 cannot flow, and consequently, the elastic hydraulic support system 1000 exhibits very high torsional rigidity. When subjected to a vertical load, for example, as shown in Fig. 2, both torque arms 3001, 3002 move upward in a vertical direction V; the first elastic body 1 and the second elastic body 2 of the upper two elastic hydraulic support apparatuses 100 used to bear the force experience further elastic compressive deformation, and at the same time, hydraulic fluid of the upper two elastic hydraulic support apparatuses 100 used to bear the force flows through the two high-pressure hoses 2001, 2002 to the lower two elastic hydraulic support apparatuses 100, so the elastic hydraulic support system 1000 exhibits very low vertical rigidity and high damping.

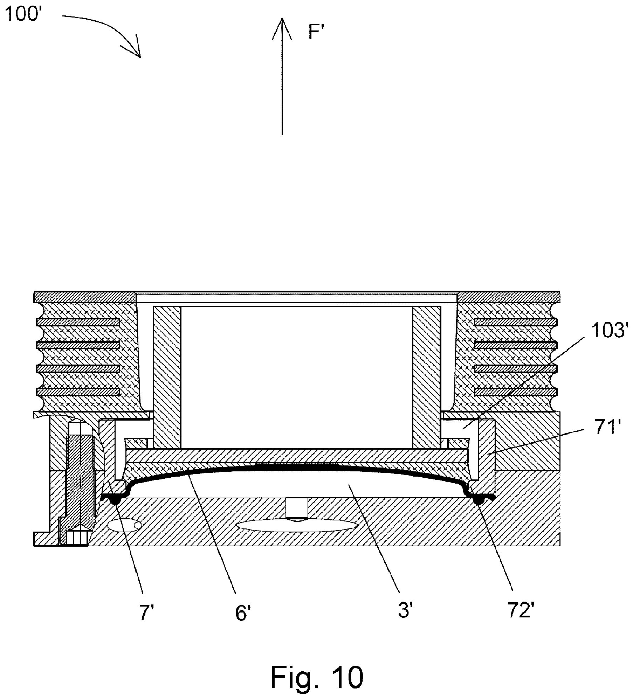

Referring to Fig. 10, the present invention also provides an elastic hydraulic support apparatus 100' in a second embodiment. The elastic hydraulic support apparatus 100' in this embodiment has essentially the same shape and structure as the elastic hydraulic support apparatus 100 in the first embodiment, so the following description focuses on the differences: the elastic hydraulic support apparatus 100' comprises a hydraulic sealing membrane 6' forming a hydraulic chamber 3', and a fixing member 7' fixed in a second movement space 103'. The fixing member 7' has a fixing part 71' extending in a first direction F', and an extension part 72' extending from the fixing part 71' toward the second movement space 103'; the fixing part 71' and the extension part 72' both apply sealing pressure to the hydraulic sealing membrane 6' in the first direction F'.

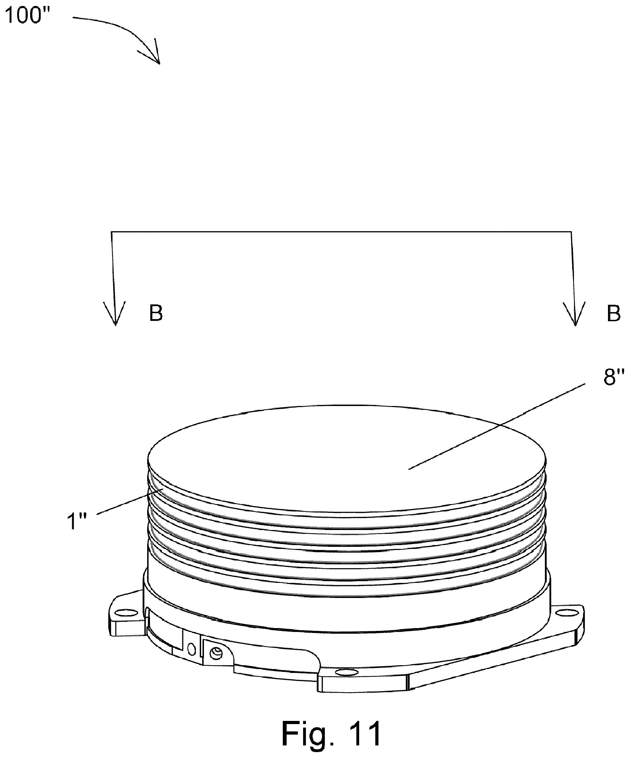

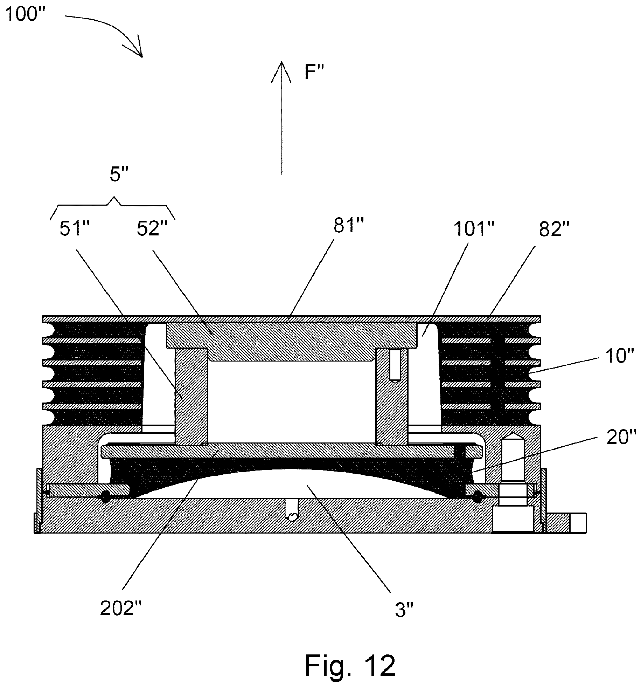

Referring to Figs. 11 and 12, the present invention also provides an elastic hydraulic support apparatus 100" in a third embodiment. The elastic hydraulic support apparatus 100" in this embodiment has essentially the same shape and structure as the elastic hydraulic support apparatus 100 in the first embodiment, so the following description focuses on the differences: the elastic hydraulic support apparatus 100" comprises a top plate 8", the top plate 8" and a first elastic body 1" being connected together by vulcanisation. The top plate 8" has a middle cooperating part 81" which cooperates with a hydraulic module 20", and a peripheral cooperating part 82" which is located around the middle cooperating part 81" and cooperates with an elastic module 10". In the present invention, as a result of the fact that the top plate 8" is configured to partly cooperate with the elastic module 10" and partly cooperate with the hydraulic module 20", when subjected to an action force by the torque arm 3001/3002, the top plate 8" first bears the force, which is then dispersed to the elastic module 10" and the hydraulic module 20". Thus, the structural stability of the elastic hydraulic support apparatus 100" is increased (for example, during installation and operation, the torque arms 3001, 3002 can be prevented from driving a movable member 5" into eccentricity), force is transferred more effectively, the internal structure is protected very well, the service life of the product is prolonged, and the dust-proofing effect is better. In this embodiment, the projections of a hydraulic chamber 3" and a first movement space 101 " in the first direction F" at least partly overlap, and the overlapping portions are at least partly projected onto the middle cooperating part 81". The elastic hydraulic support apparatus 100" further comprises a movable member 5" located between the middle cooperating part 81" and the hydraulic module 20", the movable member 5" comprising a hollow middle connecting part 51" and a transverse plate 52" located at one side of the middle cooperating part 81". Such a configuration can achieve the objective of weight reduction and also guarantee an area of contact between the movable member 5" and the middle cooperating part 81". The transverse plate 52" and the middle connecting part 51" may be a one-piece structure, or may be connected together as a composite structure by welding, bolt connection, interference fit, clearance fit, etc. Of course, in other embodiments, the movable part 5" may also be configured to be connected to the top plate 8" instead of to a second limiting member 202".

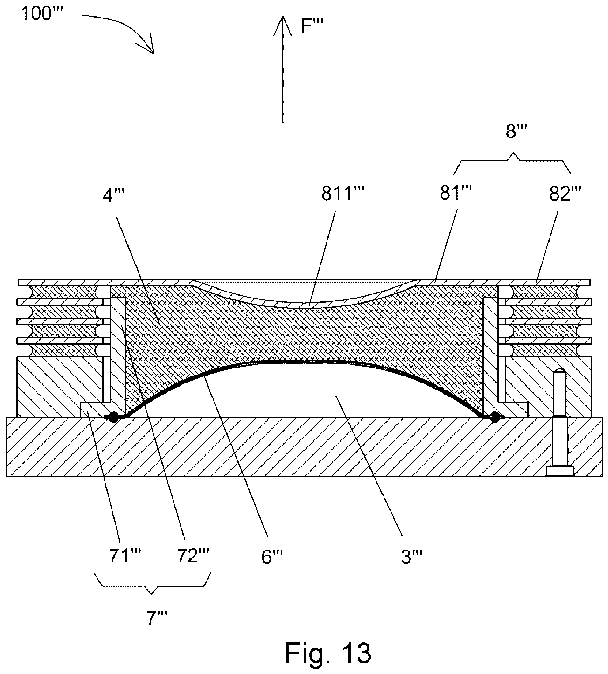

Referring to Fig. 13, the present invention further provides an elastic hydraulic support apparatus 100‴ in a fourth embodiment. The elastic hydraulic support apparatus 100‴ in this embodiment has essentially the same shape and structure as the elastic hydraulic support apparatus 100" in the third embodiment, so the following description focuses on the differences: the elastic hydraulic support apparatus 100‴ comprises a top plate 8'", the top plate 8‴ comprising a middle cooperating part 81‴ which cooperates directly with a hydraulic module 20, and a peripheral cooperating part 82‴ which is located around the middle cooperating part 81‴ and cooperates directly with an elastic module 10'". Such a configuration makes the product structure more compact and helps to reduce the product's vertical height. The middle cooperating part 81‴ cooperates directly with a second elastic body 4"', instead of the torque arm cooperating directly with the second elastic body 4‴; this can reduce wear caused to the second elastic body 4‴ by the torque arm. The middle cooperating part 81‴ also has a protruding part 811‴, which protrudes toward the second elastic body 4‴ and can be used to adjust the thickness of a corresponding part of the second elastic body 4‴ in a first direction F'", so as to increase the travel of the torque arm under the same load. The elastic hydraulic support apparatus 100‴ further comprises a hydraulic sealing membrane 6‴ forming a hydraulic chamber 3"', and a fixing member 7‴ connected to the second elastic body 4‴. The fixing member 7‴ has a fixing part 71‴ for sealing the hydraulic sealing membrane 6‴, and a limiting part 72‴ for cooperating with the top plate 8'". The second elastic body 4‴ extends partly to a region between the top plate 8‴ and the limiting part 72'''.

It will be understood that the above embodiments of the present invention may be combined in the absence of conflict to obtain further embodiments. The specific technical features described in the specific embodiments above may be combined in any suitable way in the absence of contradiction.

In the description of the present invention, it must be understood that orientational or positional relationships indicated by the terms "center", "upper", "lower", "vertical", "horizontal", "top", "bottom", "inner", "outer", "clockwise" and "anticlockwise", etc. are based on orientational or positional relationships shown in the drawings, and are merely intended to facilitate and simplify description of the present invention; they do not indicate or imply that the apparatus or element referred to must have a specific orientation or be constructed and operated in a specific orientation, and therefore cannot be interpreted as restrictions on the present invention. In addition, the terms "first" and "second" are merely used for descriptive purposes, and must not be interpreted as indicating or implying relative importance or implicitly specifying the quantity of the technical feature indicated. Thus, a feature for which "first" and "second" are defined may explicitly or implicitly include one or more of the feature. In the description of the present invention, the meaning of "multiple" is two or more, unless otherwise clearly and specifically defined.

In the present invention, unless otherwise clearly specified and defined, terms such as "mount", "connect", "join" and "fix" should be interpreted in a broad sense, e.g. they may indicate a fixed connection, or a removable connection, or an integral connection; they may indicate a mechanical connection, or an electrical connection; they may indicate a direct connection, or an indirect connection via an intermediate medium, or internal communication between two elements. Those skilled in the art can interpret the specific meaning of the abovementioned terms in the present invention according to particular circumstances.

## Claims

1. An elastic hydraulic support apparatus, defined with a first direction, wherein the elastic hydraulic support apparatus comprises an elastic module and a hydraulic module, the elastic module comprising an elastically compressible first elastic body and a reinforcing member at least partially embedded in the first elastic body, the hydraulic module comprising a hydraulic chamber and an elastically compressible second elastic body arranged in the first direction, and the elastic module and the hydraulic module being fitted together.

2. The elastic hydraulic support apparatus as claimed in claim 1, wherein the second elastic body is elastically compressed to generate preload after installation and filling with liquid.

3. The elastic hydraulic support apparatus as claimed in claim 1, wherein the elastic module has a first movement space extending in the first direction, and the elastic hydraulic support apparatus comprises a movable member which is located in the first movement space and positioned in front of the hydraulic module in the first direction.

4. The elastic hydraulic support apparatus as claimed in claim 1, wherein the hydraulic chamber is located in front of or behind the second elastic body in the first direction.

5. The elastic hydraulic support apparatus as claimed in claim 1, wherein the elastic module comprises a first limiting member, and the hydraulic module comprises a second limiting member cooperating with the first limiting member, the first limiting member being located in front of the second limiting member in the first direction.

6. The elastic hydraulic support apparatus as claimed in claim 5, wherein after installation and filling with liquid, the elastic hydraulic support apparatus has a rebound space located between the first limiting member and the second limiting member.

7. The elastic hydraulic support apparatus as claimed in claim 5, wherein the second elastic body is connected to the second limiting member.

8. The elastic hydraulic support apparatus as claimed in claim 5, wherein the projection of the hydraulic chamber in the first direction falls completely on the second limiting member.

9. The elastic hydraulic support apparatus as claimed in claim 3, wherein the elastic module comprises a first mounting member, the hydraulic module comprises a second mounting member mounted cooperatively with the first mounting member, and the first mounting member and the second mounting member together form a second movement space in which the hydraulic chamber is located.

10. The elastic hydraulic support apparatus as claimed in claim 9, wherein the first movement space and the second movement space are in communication with each other.

11. The elastic hydraulic support apparatus as claimed in claim 9, wherein the hydraulic module comprises a hydraulic sealing membrane forming the hydraulic chamber and a fixing member for fixing the hydraulic sealing membrane, the fixing member being partly located between the first mounting member and the second mounting member and partly extending into the second movement space, with an edge of the hydraulic sealing membrane being sealed between the fixing member and the first mounting member or the second mounting member.

12. The elastic hydraulic support apparatus as claimed in claim 11, wherein the fixing member and the second elastic body are connected together.

13. The elastic hydraulic support apparatus as claimed in claim 11, wherein the fixing member has a higher yield strength than the first mounting member and the second mounting member.

14. The elastic hydraulic support apparatus as claimed in claim 11, wherein the elastic hydraulic support apparatus has a connecting hole running through the second mounting member and the fixing member and extending to the first mounting member, and a connecting member located in the connecting hole.

15. The elastic hydraulic support apparatus as claimed in claim 1, wherein the elastic hydraulic support apparatus has an accommodating space located at a side of the second elastic body.

16. The elastic hydraulic support apparatus as claimed in any one of claims 1-15, wherein the movable member is connected to the hydraulic module.

17. The elastic hydraulic support apparatus as claimed in any one of claims 1-15, wherein the movable member is connected to a counterpart.

18. The elastic hydraulic support apparatus as claimed in claim 17, wherein the counterpart is a torque arm of a gearbox.

19. An elastic hydraulic support assembly, wherein the elastic hydraulic support assembly comprises a support and two elastic hydraulic support apparatuses as claimed in any one of claims 1 - 18, the support having a hollow working region, one of the elastic hydraulic support apparatuses being mounted above the working region, and the other elastic hydraulic support apparatus being mounted below the working region.

20. An elastic hydraulic support system, wherein the elastic hydraulic support system comprises two elastic hydraulic support assemblies as claimed in claim 19, wherein the upper elastic hydraulic support apparatus of one of the elastic hydraulic support assemblies is in communication with the lower elastic hydraulic support apparatus of the other elastic hydraulic support assembly, and the other two elastic hydraulic support apparatuses are in communication with each other.
